# EUROPÄISCHE PATENTSCHRIFT

(11) **EP 0 655 489 B1**
(45) Veröffentlichungstag und Bekanntmachung des Hinweises auf die Patenterteilung: **16.07.1997**
(21) Anmeldenummer: 94117422.9
(22) Anmeldetag: 04.11.1994
(51) Int. Cl.: C09J 7/02

(54) **Streifen einer Selbstklebefolie für wiederablösbare Verklebungen**
Adhesive tape for releasable bondings
Ruban adhésif pour des collage non-permanents

(30) Priorität: 20.11.1993 DE 4339604
(43) Veröffentlichungstag der Anmeldung: 31.05.1995
(73) Patentinhaber: Beiersdorf Aktiengesellschaft, D-20245 Hamburg (DE)
(72) Erfinder: Lühmann, Bernd, Dr., D-22846 Norderstedt (DE)

(56) Entgegenhaltungen:
- EP-A- 0 361 215
- EP-A- 0 513 719
- US-A- 4 348 440

## Beschreibung

Die Erfindung betrifft einen Klebfolien-Abschnitt für eine wiederlösbare Verklebung.

Derartige Klebfolien sind bekannt. So beschreibt die DE 33 31 016 A1 eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

Ferner beschreibt die DE 37 14 453 C1 einen zerstörungsfrei von Übungsobjekten wieder abnehmbaren Übungssprengkörper, der mit solch einer Klebfolie reversibel befestigt wird.

Auch die WO 92/11333 beschreibt unter anderem Klebfolien für entsprechende Anwendungen, wobei die eingesetzten Klebfolien eine geringe Elastizität bei gleichzeitig hoher Dehnung aufweisen.

Die DE 42 22 849 C1 beschreibt ebenfalls einen Streifen einer Klebfolie dieser Art mit einem besonders ausgestalteten Anfasser.

Die in den vorgenannten Patentschriften dargestellten Klebstoffsysteme weisen jedoch auch eine Anzahl von Nachteilen auf:
- Um die Klebfolie aus der Klebfuge herauslösen zu können, muß ein Teil der selben in Form eines Anfassers, aus dieser hervortreten. Die Klebfolie ist damit notwendigerweise bei der Verklebung nicht flexibler Gegenstände nicht völlig unsichtbar, sondern der Anfasser ist sichtbar, welches optisch unvorteilhaft erscheinen kann und bei Verwendung von Materialien, welche unter Lichteinfluß altern, auch zu technischen Problem führen kann.
- Beim Verkleben kann es leicht dazu kommen, daß die gesamte Klebfolie, also inklusive Anfasser, in der Klebfuge verschwindet. Besonders dem Laien kann dies passieren, wenn er einen Abschnitt einer solchen Klebfolie nicht so am Rande des Substrats plaziert, daß ein Anfasser übersteht und dann aus der Klebfuge herausragt. Beim Lösen der Verklebung ist dann guter Rat teuer und ein Zerstören zumindest des einen Substrats kann die Folge sein.
- Tritt ein Reißen der Klebfolien beim Ablöseprozeß auf und verbleibt ein gerissener Klebfolienteil vollständig in der Klebfuge, so ist eine rückstandsfreie Trennung der verklebten Materialien ohne Zerstörung der Verklebungspartner zumeist nicht mehr möglich, welches einen erheblichen Schaden verursachen kann.
- Die Nutzung von nicht oder nur gering dehnbaren Schichten als Bestandteil der Klebfolien ist nicht möglich. Entsprechende Schichten, z.B. Schäume können aber durchaus technisch wertvolle Bestandteile sein, z.B. um auf rauhen Haftgründen eine gute Verklebungsfestigkeit zu erreichen.

Ziel der vorliegenden Erfindung war es, Klebfolien für wiederablösbare Verklebungen zu realisieren, welche nach dem Verkleben vollständig im Bereich der Klebfuge liegen, also "unsichtbar" sind, und die dennoch auf einfache Weise vorzugsweise ein beschädigungsfreies und rückstandsfreie Lösen der verklebten Gegenstände erlauben. Insbesondere sollte kein Anfasser zum Herausziehen der Klebfolie aus der Klebfuge nötig sein. Ebenfalls soll selbst bei einem Reißen der Klebfolie während des Ablöseprozesses ein zerstörungsfreies Lösen der Verklebungspartner möglich sein. Die Verwendung nicht oder nur geringfügig dehnbarer Schichten als Bestandteil der Klebfolien soll möglich sein und zur Erzeugung klebtechnisch wichtiger Eigenschaften genutzt werden.

Demgemäß betrifft die Erfindung einen Klebfolien-Abschnitt, wie er in den Ansprüchen näher gekennzeichnet ist. Vorteilhafte Ausgestaltungen sind dabei in Unteransprüchen umschrieben.

Dabei wird ein flächiges Stückchen doppelseitigen Selbstklebefilms partiell derart mit einem nichtklebrigen Material überzogen, daß einem klebrigen Bereich einer Seite stets ein nichtklebriger Bereich der anderen Seite gegenüberliegt. Zum Handling bei der Applikation (Verklebung) sind die haftklebrigen Bereiche vorteilhaft mit Trennlaminaten überzogen, welche gleichzeitig dem Schutz der Klebmasse vor der Nutzung dienen. Optional kann der doppelseitige Selbstklebefilm zusätzliche Schichten aufweisen, wie z.B. Zwischenschichten aus Kunststoff-Folien, geschäumten Flächengebilden, Filamenten, um nur einige zu nennen. Die Enden des doppelseitigen Selbstklebefilmes können optional beidseitig klebfrei sein.

Die so vorliegenden Klebfolienstücke eignen sich hervorragend für eine wiederlösbare Verklebung vielfältiger Materialien, z.B. in Haushalt und Büro. Auf einfache Weise können z.B. Poster, Zettel, kleine Bilder etc. derart verklebt werden, daß die Klebfolie unsichtbar in der Klebfuge verbleibt. Weitere möglichen Anwendungen umfassen den wiederlösbaren Verschluß von Kartons, die wiederlösbare Fixierung von z.B. Photos in Photoalben, um nur einige zu nennen.

Ein rückstandsfries Ablösen des fixierten Gegenstandes ist auf einfache Weise durch Ziehen desselbigen in Richtung der Klebfolienlängsrichtung parallel zur Verklebungsfläche möglich. Der Ablöseprozeß soll dabei derart erfolgen, daß sich die klebenden Bereiche voneinander entfernen. Die einfache Ablösung des verklebten Gegenstandes wird dabei durch die Dehnung des doppelseitigen Haftklebebandes ausgehend von der Klebfolienmitte erreicht. Der auftretende Adhäsionsverlust wird durch Verringerung der Klebrigkeit der Haftklebemasse analog DE 33 31 016 bzw. DE 42 22 849 begünstigt, sowie durch die Reduktion der Klebfoliendicke, verursacht durch die Dehnung der Klebstoff-Folie.

Dabei braucht das Ziehen nicht exact ausgeführt zu werden. Weder ist es erforderlich, genau so zu ziehen, daß sich die klebenden Bereiche voneinander entfernen, denn auch ein "schräges" Ziehen, selbst ein Quer-Ziehen, führt zum Erfolg, wenn auch weniger elegant. Noch ist es erforderlich, genau in Richtung der Klebfuge zu ziehen. Auch hier sind Abweichungen erlaubt, wobei dann allerdings Vorsicht geboten ist, um die Substrate nicht zu beschädigen.

Bei erfindungsgemäßen Ausgestaltungen mit einem Zwischenträger, der entweder leicht reißt, wie Seidenpapier oder eine dünne Folie, oder auch mit einem Zwischenträger mit Sollbruchstelle in dem Bereich, in dem die Klebfolie auseinandergezogen werden soll, oder bei Einsatz hochelastischer oder nicht elastischer, aber hoch dehnbarer Zwischenträger, erfolgt in analoger Weise. Hierbei ist, wie im zuvor geschilderten Fall, ein rückstandsfreies Ablösen insbesondere gewährleistet mit Klebfolien vom "stripfähigen" Typus, wie sie u.a. im DE 33 31 016 beschrieben sind. Aber auch Produkte vom Typus wie in WO 92/11333 lassen sich entsprechend verwenden.

Bei solchen erfindungsgemäßen Ausgestaltungen mit einer Klebfolie vom eher klassischen Typus einer Selbstklebemasse, wie sie für Klebebänder in weitem Umfang eingesetzt werden, ist das Ablösen der auseinandergezogenen Teile nach Lösen der Verklebung weniger leicht. Dies spielt für manche Anwendungen aber auch keine große Rolle, insbesondere dann, wenn die Reste durchaus auf den Substraten verbleiben können, ohne zu stören. Sollen in diesen oder anderen Fällen die Reste aber besser entfernbar sein, so empfiehlt sich jeweils ein Anfasser, um an dem Rest leichter ziehen zu können. Ein solcher Anfasser kann insbesondere so ausgestaltet sein, daß sich die nicht-klebenden Bereiche um eine Kante des Klebfolien-Abschnitts herum erstrecken, z.B. einige Millimeter über den darunter liegenden klebenden Bereich.

Die Scherbelastbarkeit der mit den erfindungsgemäßen Klebfolien hergestellten Klebverbindungen wird bestimmt durch:
- die Kraft, die aufgebracht werden muß und die Klebfolie (Klebmasse plus ggf. Zwischenträger) in Längsrichtung zu verstrecken.
- bei einem geringfügigen Überlappen der nicht haftklebrigen Bereiche die Scherfestigkeit der Klebfolie zu diesen.

### Geeignete Materialien

### Klebfolien (doppelseitige Haftklebebänder)

Erfindungsgemäß geeignet sind übliche doppelseitige Haftklebebänder, insbesondere aber solche, die sich nach Verkleben durch Ziehen in der Verklebungsebene rückstandsfrei ablösen lassen. Geeignete Haftklebemassen schließen solche auf Basis von Naturkatuschuk/Harz-Gemischen, Synthesekautschuk/Harz-Gemischen, Acrylatcopolymeren, Polyurethanen etc. ein, um nur einige zu nennen. Insbesondere geeignet sind Klebefolien, wie sie in DE 33 31 016, DE 42 22 849 und WO 92/11333 beschrieben sind. Typische Abmessungen der erfindungsgemäßen Klebfolien betragen (Breite x Höhe x Dicke) 3mm x 5mm x 25µm bis 100mm x 200mm x 3000µm, bevorzugt 5mm x 10mm x 50µm bis 40mm x 80mm x 1000µm, bei Einsatz von geschäumten Zwischenträgern auch darüber.

### Zwischenträger

Zur Adjustierung der Scherbelastbarkeit und der zur Lösung der Klebverbindung nötigen Kraft kann die Klebfolie optional einen Zwischenträger enthalten. Geeignete Materialien umfassen u.a. Kunststoff-Folien, Vliese, Schäume, Filamente. Der Einsatz von geschäumten Zwischenträgern ermöglicht zusätzlich eine bessere Benetzung der Klebmasse bei Verklebung oberflächenrauher Materialien. Geeignete Reißfestigkeiten der Zwischenträger liegen so niedrig, daß ein einwandfreies Lösen der Klebverbindung möglich ist, oder aber eine Sollbruchstelle mittels Perforation, Schnitt oder dergleichen ist eingearbeitet um eine einwandfreie Trennung zu ermöglichen.

### Nicht haftklebrige Bereiche.

Die Erzeugungsmöglichkeit der nicht haftklebrigen Bereiche sind vielfältig. Sie kann z.B. durch Inertisierung der Haftklebemasse mittels eines nicht klebrigen Lackes erfolgen. Weitere Möglichkeiten umfassen das Zukaschieren von dünnen Schichtmaterialien wie Kunststoff-Folien und Papieren. Überlappen sich die nicht haftklebrigen Bereiche geringfügig, so kann die für das Lösen der Klebverbindung benötigte Kraft über die Scherfestigkeit der Klebfolie gegen die nicht haftklebrigen Bereiche sowie über die Dehncharakteristik der nicht haftklebrigen Bereiche gesteuert werden. Zum Einsatz kommen können insbesondere trennlackbeschichtete und nicht trennlackbeschichtete Folien und Papiere.

### Trennlaminat.

Als Trennlaminate eignen sich die üblichen Trennfolien und Trennpapiere, z.B. silikonisierte Trennfolien/Trennpapiere, welche üblicherweise als gut trennende flächige Medien gegenüber Haftklebemassen eingesetzt werden.

Generell sei zu Herstellung, Verarbeitung und Handhabung von den besonders bevorzugten Klebfolien auf DE 33 31 016, DE 42 22 849 und WO 92/11333 verwiesen.

In den folgenden Beispielen soll die Erfindung anhand von Ausführungsbeispielen beschrieben werden, ohne sie damit unnötig einschränken zu wollen. Alle Teile verstehen sich als Gewichtsteile.

### Beispiel 1

Eine Haftklebemasse B bestehend aus einem Gemisch von 50 Teilen SIS-Dreiblockpolymer mit einem Blockpolystyrolgehalt von 29 Gew.-% (Vector 4211, Dexco), 50 Teilen eines Pentaesters von teilhydriertem Kolophonium (Pentalyn H-E, Hercules) und 1 Teil eines phenolischen Alterungsschutzmittels wird in einer Schichtstärke von 600 µm auf ein doppelseitiges silikonisiertes 80g/m² starkes Trennpapier extrudiert und das Laminat aus Klebemasse und Trennpapier zu 50 mm breiten Mutterrollen gewickelt. In einem zweiten Arbeitsschritt wird zunächst die eine Seite des vorgenannten Klebelaminats halbseitig (in 25mm Breite) mit einer 30µm starken silikonisierten Polypropylenfolie (silikonisierte Seite zur Klebmasse), die noch offene Klebmasseoberfläche anschließend derart mit einem 35 mm breiten silikonisierten Trennpapier eingedeckt, daß dieses 10 mm über die Polypropylenfolie herausragt, um später als Anfasser zum leichten Lösen der Trennfolie zu dienen. Nach dem Auskaschieren des doppelseitig silikonisierten Trennpapieres wird die gegenüberliegende Klebfolienseite spiegelbildlich entsprechend der ersten Klebmasseseite mit der gleichen Polypropylenfolie und einem entsprechenden silikonisierten Trennpapier einkaschiert. Die Herstellung von einzelnen Klebfolienstücken erfolgt durch Vereinzelung mittels einer Hubstanze. Erhalten werden Klebfolienstücke der Abmessungen 20 mm x 50 mm.

Entsprechende Klebfolienstücke eigenen sich sehr gut zur Verklebung von leichten flächenhaften Gebilden, wie z.B. Postern, kleinen Bildern etc., oder auch zum Verschluß von Kartons. Zur Fixierung z.B. eines Posters wird das silikonisierte Trennpapier von einer Seite der Klebmasse entfernt und die Klebfolie mit der haftklebrigen Seite nach oben auf dem Haftgrund, der das Poster tragen soll, fixiert. Nach Abtrennen des vorderseitigen Trennpapiers kann das Poster befestigt werden. Zur sicheren Verklebung werden zwei Klebfolien genutzt, welche sich nach Fixierung des Posters unsichtbar (vollständig vom Poster verdeckt) in der Nähe der oberen linken und oberen rechten Ecke des Posters befinden.

Zur rückstandsfreien Ablösung des Posters wird dieses senkrecht zur Verklebungsfläche nach unten gezogen.

### Beispiel 2

Bei der Weiterverarbeitung der Mutterrollen aus Beispiel 1 werden zur Erzeugung der nicht haftklebrigen Bereiche anstelle der 25 mm breiten Polypropylenfolien 30 mm breite silikonisierte Polypropylentrennfolien derart eingesetzt, daß diese sich in der Mitte der Trennfolie je 10 mm überlappen und somit in der Mitte der Klebfolie ein 10 mm langer klebfreier Bereich erzeugt wird. Entsprechende Klebfolienstücke eignen sich ebenfalls sehr gut zur Verklebung von leichten flächenhaften Gebilden, wie z.B Postern, kleinen Bildern etc. sowie zum Verschluß von z.B. Kartons. Im Unterschied zu Beispiel 1 ist die zum Lösen der Klebverbindung benötigte Kraft und damit die erreichbare Scherfestigkeit der Verklebung außer von der Dehncharakteristik der Klebmasse zusätzlich von der Scherfestigkeit der Verklebung zwischen Klebmasse und den silikonisierten Polypropylenfolien im Überlappungsbereich derselben abhängig. Die benötigte Ablösekraft und Scherbelastbarkeit der Verklebung ist daher im Vergleich zu Beispiel 1 erhöht.

### Beispiel 3

Anstelle der nichthaftklebrigen Abdeckungen aus silikonisierte Polypropylenfolie in Beispiel 2, werden Abdeckungen gleicher Abmessungen aus 10µm dickem nicht silikonisiertem biaxial verstrecktem Polyethylenterephthalat eingesetzt.

Die benötigte Ablösekraft ist im Vergleich zu Beispiel 1 ebenfalls erhöht.

### Beispiel 4

Analog zum Beispiel 2 wird anstelle der SIS-basierenden Haftklebemasse eine wasserklare selbstklebrige Acrylatcopolymermasse in einer Stärke von 1200µm eingesetzt. Die Acrylatcopolymermasse weist eine Reißfestigkeit von ca. 0,5 MPa auf. Entsprechende Klebfolienstücke (Produkt Scotch 4910 der 3M) eignen sich ebenfalls sehr gut zur Verklebung von leichten flächenhaften Gebilden, wie z.B. Postern, kleinen Bildern etc.. Sie lassen sich im Gegensatz zu den Klebfolienstücken aus Beispiel 2 aufgrund der bekanntermaßen sehr guten Alterungseigenschaften von Acrylatcopolymeren besonders dann einsetzen, wenn es auf höchste Transparenz der Klebfolien (z.B. bei Verklebung transparenter Materialien) oder auf ein exzellentes Alterungsverhalten, z.B. eine herausragende UV-Stabilität ankommt.

### Beispiel 5

Ein Klebfolienlaminat bestehend aus einem 13 g/m² schweren Seidenpapier, welches beidseitig in 200µm Stärke mit der Haftklebmasse aus Beispiel 1 beschichtet ist, wird entsprechend Beispiel 1 verarbeitet. Im Unterschied zu Beispiel 1 ist die zum Lösen der Klebverbindung benötigte Kraft und damit die erreichbare Scherfestigkeit der Verklebung außer von der Dehncharakteristik der Klebmasse zusätzlich von der Reißfestigkeit des Seidenpapieres abhängig. Die benötigte Ablösekraft ist daher im Vergleich zu Beispiel 1 erhöht. Dieses Produkt hat Vorteile bei der Fertigung. Insbesondere beim Aufschneiden aus Mutterrollen wird ein Abheben der Klebmasse von den Mutterrollen verhindert. Zudem stört der Träger den Ablöseprozeß nicht, da er sehr leicht reißbar ist.

### Beispiel 6

Ein Klebfolienlaminat bestehend aus einer 75µm starken Polyurethanfolie auf Basis eines thermoplastischen Polyesterurethans (Platilon U01), welches beidseitig in 100µm Stärke mit der Haftkebemasse aus Beispiel 1 beschichtet ist, wird entsprechend Beispiel 1 verarbeitet. Im Unterschied zu Beispiel 1 ist die zum Lösen der Klebverbindung benötigte Kraft und damit die erreichbare Scherfestigkeit der Verklebung außer von der Dehncharakteristik der Klebmasse zusätzlich von der zur Dehnung der Polyurethanfolien benötigten Kraft abhängig.

Die benötigte Ablösekraft ist daher im vergleich zu Beispiel 1 erhöht.

### Beispiel 7

Klebfolienstücke, bestehend aus einem 3000µm starken EPDM-Schaum der Dichte 65 kg/m³ und einer beidseitigen je 200µm starken Klebstoffbeschichtung mit der in Beispiel 1 beschriebenen Haftklebemasse, werden derart hergestellt, daß der Schaum in der Mitte der Klebfolie vollständig durchschnitten ist.

Entsprechende Folien sind besonders geeignet für die Verklebung von Materialien mit rauhen Oberflächen oder/und zur Verklebung auf rauhen Untergründen, da durch Einsatz des Schaumes die Deformationsfähigkeit der Klebstoff-Folie senkrecht zur Folienebene deutlich erhöht wird, wodurch die Oberflächenbenetzung auf rauhen Oberflächen und damit die Verklebungsfestigkeit deutlich gesteigert wird.

### Beispiel 8

Eine Klebfolie entsprechend Beispiel 2, jedoch mit einer nur 75g/m² dicken Klebstoffschicht und 35 mm langen silikonisierten Polypropylentrennfolien, wobei 5 mm der Trennfolien am jeweiligen Ende der Klebefolien um die Klebefolie herum umgeklappt sind und so Anfasser bilden, eignet sich ebenfalls sehr gut für die Verklebung von Postern. Beim schnellen Lösen der Klebverbindung reißt das Klebelaminat aufgrund der zu geringen Reißfestigkeit. Ein rückstandsfreies Lösen der Klebfolienreste vom Haftgrund und zuvor verklebtem Gegenstand ist dennoch möglich, wenn die silikonisierten Polypropylentrennfolien hochgeklappt werden und die Klebfolienteile durch langsames Ziehen parallel zur Verklebungsebene abgelöst werden.

### Beispiel 9

Alternativ zum Beispiel 1 wird eine Klebfolie entsprechenden Aufbaus, jedoch der Abmessungen 5 mm x 10 mm x 100 um (Breite x Länge x Dicke) und 5 mm x 5 mm großen nicht haftklebrigen Abdeckungen aus 30µm starker silikonisierter Polypropylentrennfolie hergestellt. Entsprechendes Material eignet sich sehr gut zur reversiblen Verklebung von Photos in Photoalben.

## Patentansprüche

1. Klebfolien-Abschnitt für eine wiederlösbare Verklebung,
a) aus einer doppelseitig klebenden Klebfolie,
b) deren Klebflächen an versetzt gegenüberliegenden Bereichen nicht-klebend ausgerüstet sind, wobei
c) sich die nicht-klebenden Bereiche nicht oder nur geringfügig überlappen, und
d) die damit hergestellte Klebebindung durch Auseinanderziehen der klebenden Bereiche lösbar ist, insbesondere durch Ziehen in Richtung der Verklebungsebene.

2. Klebfolien-Abschnitt nach Anspruch 1, dadurch gekennzeichnet, daß er mit oder ohne Zwischenträger elastisch oder plastisch dehnbar ist.

3. Klebfolien-Abschnitt nach Anspruch 1, dadurch gekennzeichnet, daß die Adhäsion der Klebfolie geringer als die Kohäsion ist, das Haftvermögen beim Dehnen der Folie weitgehend verschwindet, und das Verhältnis von Abzugskraft zu Reißlast mindestens 1 : 1,5 ist.

4. Klebfolien-Abschnitt nach Anspruch 1, dadurch gekennzeichnet, daß die Klebfolie eine solche auf Basis von thermoplastischem Kautschuk und klebrigmachenden Harzen ist, mit hoher Elastizität und geringer Plastizität.

5. Klebfolien-Abschnitt nach Anspruch 1, dadurch gekennzeichnet, daß die nicht-klebenden Bereiche einen nicht-klebrigen Lack oder ein zukaschiertes Schichtmaterial, wie ein Papier oder eine Kunststoff-Folie aufweisen.

6. Klebfolien-Abschnitt nach Anspruch 1, dadurch gekennzeichnet, daß er mit einem nicht- oder nur gering dehnbaren Zwischenträger ausgerüstet ist, der ggf. mit einer Sollbruchstelle, wie einem Schnitt, Teilschnitt oder einer Perforation an der Linie ausgerüstet ist, an der sich die nicht-klebenden Bereiche seitenversetzt treffen.

7. Klebfolien-Abschnitt nach Anspruch 1, dadurch gekennzeichnet, daß die klebenden Bereiche mit einem Trennlaminat, wie einem silikonisierten Trennpapier oder einer Trennfolie, abgedeckt sind, wobei insbesondere Anfasser zum Abziehen der Trennlaminate vorgesehen sind.

8. Klebfolien-Abschnitt nach Anspruch 1, dadurch gekennzeichnet, daß die nicht-klebenden Bereiche so ausgestaltet sind, daß sie sich um eine Kante, insbesondere die obere und untere Endkante des Klebfolien-Abschnitts herum erstrecken und damit Anfasser bilden, an denen der Klebfolien-Abschnitt oder seine Reste nach erfolgter Verklebung und Wiederablösung abgezogen werden kann.

## Claims

1. Adhesive-film section for a rereleasable bond,
a) comprising a double-sided adhesive film,
b) whose adhesive areas have been given a non-adhesive treatment on regions in staggered opposition to one another,
c) the non-adhesive regions having little or no overlap, and
d) the adhesive bond produced therewith being separable by pulling apart the adhering regions, especially by pulling in the direction of the bond plane.

2. Adhesive-film section according to Claim 1, characterized in that it is extensible plastically or elastically with or without intermediate supports.

3. Adhesive-film section according to Claim 1, characterized in that the adhesion of the adhesive film is lower than the cohesion, the adhesiveness largely disappears when the film is extended, and the ratio of pulling force to tearing load is at least 1:1.5.

4. Adhesive-film section according to Claim 1, characterized in that the adhesive film is based on thermoplastic rubber and tackifier resins, with high elasticity and low plasticity.

5. Adhesive-film section according to Claim 1, characterized in that the non-adhering regions have a non-tacky coating material or a laminated-on layer material, such as a paper or a plastics film.

6. Adhesive-film section according to Claim 1, characterized in that it is treated with an intermediate support of little or no extensibility which if desired is provided with a predetermined breaking point, such as a cut, partial cut or a perforation on the line, at which point the non-adhering regions meet with lateral offset.

7. Adhesive-film section according to Claim 1, characterized in that the adhering regions are covered with a release laminate, such as a siliconized release paper or a release film, and, in particular, grip tabs are provided for pulling off the release laminates.

8. Adhesive-film section according to Claim 1, characterized in that the non-adhering regions are designed such that they extend around one edge, especially the upper and lower end edge of the adhesive-film section, and thus form grip tabs with which the adhesive-film section or its residues, after bonding and rerelease have taken place, can be pulled off.

## Revendications

1. Tronçon de feuille adhésive pour un collage non permanent, obtenu
a) à partir d'une feuille adhésive collante des deux côtés,
b) dont les surfaces adhésives sont pourvues, de manière non collante, de zones se faisant face avec décalage,
c) les zones non collantes ne se recouvrant pas ou ne se recouvrant que faiblement, et
d) la liaison collante réalisée avec celui-ci étant détachable par séparation sous traction des zones collantes, en particulier, par traction dans la direction du plan de collage.

2. Tronçon de feuille adhésive selon la revendication 1, caractérisé en ce qu'il est extensible de manière élastique ou plastique, avec ou sans support intermédiaire.

3. Tronçon de feuille adhésive selon la revendication 1, caractérisé en ce que l'adhésion de la feuille adhésive est inférieure à la cohésion, en ce que le pouvoir adhésif disparaît dans une large mesure lors de l'extension de la feuille, et en ce que le rapport de la force de retrait à la charge de rupture est au moins de 1 : 1,5.

4. Tronçon de feuille adhésive selon la revendication 1, caractérisé en ce que la feuille adhésive est une feuille à base de caoutchouc thermoplastique et de résines renforçant l'adhésivité, ayant une élasticité élevée et une plasticité faible.

5. Tronçon de feuille adhésive selon la revendication 1, caractérisé en ce que les zones non collantes présentent une laque non collante ou un matériau stratifié contre-collé, comme un papier ou une feuille de matière synthétique.

6. Tronçon de feuille adhésive selon la revendication 1, caractérisé en ce qu'il est pourvu d'un support intermédiaire non extensible ou seulement peu extensible, qui est muni, le cas échéant, d'un point de rupture prédéterminé, tel qu'une coupe, une coupe partielle ou une perforation, sur la ligne, auquel les zones non collantes se rencontrent d'une manière décalée latéralement.

7. Tronçon de feuille adhésive selon la revendication 1, caractérisé en ce que les zones collantes sont recouvertes d'un stratifié de séparation, tel qu'un papier de séparation traité aux silicones ou une feuille de séparation, des languettes de prise en vue du retrait des stratifiés de réparation étant prévus en particulier.

8. Tronçon de feuille adhésive selon la revendication 1, caractérisé en ce que les zones non collantes sont réalisées de telle manière qu'elles se prolongent autour d'un rebord, en particulier des rebords d'extrémité supérieur et inférieur du tronçon de feuille adhésive et forment de ce fait des languettes de prise, grâce auxquelles on peut détacher le tronçon de feuille adhésive ou ses résidus, après collage et décollage réussis.
